(19) Europäisches Patentamt
European Patent Office
Office européen des brevets

(11) EP 4 787 529 A1

(12) **EUROPEAN PATENT APPLICATION**
published in accordance with Art. 153(4) EPC

(43) Date of publication:
**05.08.2026 Bulletin 2026/32**

(21) Application number: **24887323.4**

(22) Date of filing: **15.05.2024**

(51) International Patent Classification (IPC):
***H01M 10/0567*** *(2010.01)*

(52) Cooperative Patent Classification (CPC):
**H01M 10/0525; H01M 10/0567; H01M 10/0569; H01M 10/42; H01M 50/414;** Y02E 60/10

(86) International application number:
**PCT/CN2024/093420**

(87) International publication number:
**WO 2025/097699 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.11.2023 CN 202311493719**

(71) Applicant: **Contemporary Amperex Technology Co., Limited**
**Ningde, Fujian 352100 (CN)**

(72) Inventors:
- **WU, Kai**
  **Ningde, Fujian 352100 (CN)**
- **WU, Degui**
  **Ningde, Fujian 352100 (CN)**
- **CHEN, Peipei**
  **Ningde, Fujian 352100 (CN)**

(74) Representative: **Lorenz Seidler Gossel Part. mbB**
**Widenmayerstr. 23**
**80538 München (DE)**

# (54) SECONDARY BATTERY AND ELECTRIC DEVICE

(57) A secondary battery and an electric device. The secondary battery comprises a composite separator and an electrolyte. The composite separator comprises a base membrane and a functional resin layer arranged on the surface of the base membrane. The functional resin layer comprises a functional polymer. The functional polymer contains an iminodiacetate group. cations of the iminodiacetate group include at least one of $Li^+$, $Na^+$, and $K^+$. At 25°C, the conductivity of the electrolyte is greater than or equal to 5 mS/cm.

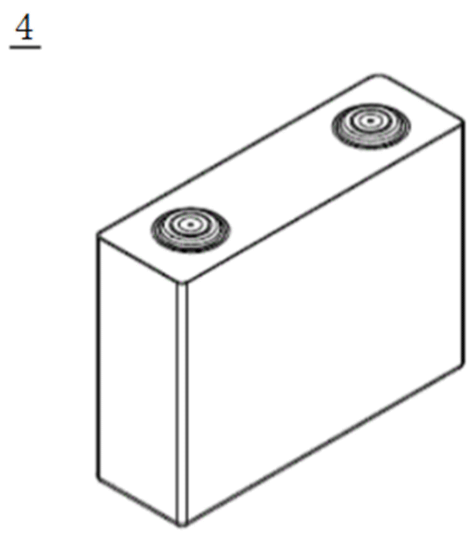

FIG. 1

EP 4 787 529 A1

Processed by Luminess, 75001 PARIS (FR)

## Description

### CROSS-REFERENCE TO RELATED APPLICATIONS

The present application claims priority to Chinese Patent Application No. 202311493719.9, filed on November 09, 2023 and entitled "SECONDARY BATTERY AND ELECTRIC APPARATUS", which is incorporated herein by reference in its entirety.

### TECHNICAL FIELD

The present application relates to the field of battery technologies, and in particular, to a secondary battery and an electric apparatus.

### BACKGROUND

Secondary batteries such as lithium-ion batteries have been increasingly widely used due to their clean and renewable characteristics, and lithium-ion secondary batteries have been widely applied in many fields such as consumer electronic products, electric vehicles, and energy storage. Secondary batteries such as lithium-ion batteries mainly work by relying on migration of ions between a positive electrode and a negative electrode, and a separator is disposed between a positive electrode sheet and a negative electrode sheet. The separator isolates the positive and negative electrodes, preventing short circuits inside the battery. With continuous expansion of an application scope of secondary batteries, the separator can also be infiltrated by an electrolyte to form a channel for ion migration.

With continuous expansion of an application scope of secondary batteries, the performance requirements for secondary batteries are becoming higher and higher, for example, seeking higher energy density. Thus, using high-voltage positive electrode materials to seek higher energy density has become a trend. However, when the battery operates at high voltage, the structure of a positive electrode material tends to be unstable, and the structure of the positive electrode material is prone to collapse, directly leading to the dissolution of a large amount of transition metal ions. The dissolved transition metal ions may deposit on an anode or catalyze the decomposition of components of a negative electrode interface film and electrolyte. At the same time, there is also the risk of battery cell open circuit failure caused by dendrite growth piercing the separator, significantly limiting the improvement of the cycling performance and storage stability of secondary batteries.

Therefore, the traditional technology needs further improvement.

### SUMMARY

According to various embodiments of the present application, the present application provides a secondary battery and an electric apparatus, aiming to improve the cycling performance and storage stability of the secondary battery.

The present application is achieved through the following technical solutions.

According to a first aspect, the present application provides a secondary battery, the secondary battery including a composite separator and an electrolyte; where

the composite separator includes a base film and a functional resin layer provided on a surface of the base film, the functional resin layer includes a functional polymer, the functional polymer contains an iminodiacetate group, and cations of the iminodiacetate group include at least one of $Li^+$, $Na^+$, and $K^+$; and

at 25°C, a conductivity of the electrolyte is greater than or equal to 5 mS/cm.

In the above secondary battery, on one hand, a composite separator with a specific structure is used, and the functional resin layer of the composite separator contains an iminodiacetate group capable of directionally capturing transition metal ions, where the iminodiacetate group is fixed on a surface of the composite separator through the functional resin layer, and the cations such as $Li^+$, $Na^+$, and $K^+$ contained in the iminodiacetate group exchange with transition metal ions, thereby fixing the transition metal ions in the electrolyte on the surface of the composite separator, reducing the probability of the transition metal ions at the electrode sheet or dispersed in the electrolyte; on the other hand, in the process where the cations in the iminodiacetate group in the functional resin layer exchange ions with the transition metal ions in the electrolyte, the iminodiacetate group becomes electronegative after dissociating the cations, which repels the anions of the electrolytic salt in the electrolyte while attracting active ions such as lithium ions, inhibiting the transport of anions and cations between the positive and negative electrodes during the charging and discharging process, leading to increased polarization. Therefore, by simultaneously controlling the conductivity of the electrolyte, the ability of the solvent in the electrolyte to dissociate the electrolytic salt is enhanced, promoting the transport of anions and cations in the

electrolyte. In this way, the two aspects cooperate to ensure a high ion transport rate while achieving directional capture of transition metal ions, thereby effectively improving the cycling performance and storage stability of the secondary battery.

In some embodiments, the iminodiacetate group is represented by formula (1):

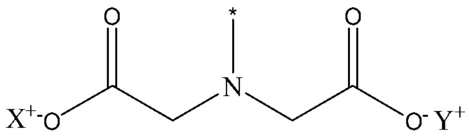

(1) ,

where $X^+$ and $Y^+$ are each independently selected from any one of $H^+$, $Li^+$, $Na^+$, and $K^+$, and $X^+$ and $Y^+$ are not both $H^+$; and

* represents an attachment site.

In some embodiments, the functional polymer has the iminodiacetate group grafted onto its side chains.

By grafting the iminodiacetate group onto the side chains, the iminodiacetate group is introduced into the functional polymer, forming a chemical bond connection between the iminodiacetate group and the polymer, making it more stably fixed on the functional resin layer, reducing the probability of its dissociation and dispersion into the electrolyte.

In some embodiments, a volume-based particle size $D_v50$ of the functional polymer is 100 nm to 1200 nm;

optionally, the volume-based particle size $D_v50$ of the functional polymer is 100 nm to 1000 nm; and
further optionally, the volume-based particle size $D_v50$ of the functional polymer is 200 nm to 600 nm.

By regulating the volume-based particle size of the functional polymer, on one hand, the polymer maintains a relatively large specific surface area, increasing the sites of the iminodiacetate groups exposed on a surface of the functional resin, thereby enhancing the capture efficiency of the functional resin layer for transition metal ions in the electrolyte; on the other hand, this ensures that after accumulation and aggregation, the functional polymer in the functional resin layer still forms a certain gap, which is equivalent to the functional resin layer retaining a certain porosity, enhancing the ion migration efficiency formed after the composite separator is infiltrated by the electrolyte, thereby further improving the cycling performance of the secondary battery.

In some embodiments, the functional polymer satisfies at least one of the following conditions (1) to (3):

(1) a preparation raw material of a main chain of the functional polymer includes at least one of an acrylic monomer and styrene, where
the acrylic polymer chain or styrene polymer chain has the advantages of high porosity and large specific surface area, and has strong adsorption capacity for the electrolyte, which can make the iminodiacetate group fully contact the electrolyte, quickly capture transition metal ions, reduce the probability of rapid transition metal migration and deposition on the negative electrode. At the same time, good acid and alkali resistance, strong redox stability, and relatively low swelling and shrinkage are exhibited, which can improve the stability of the composite separator, further improving the performance of the secondary battery;
(2) the functional polymer is a crosslinking polymer, where
the crosslinking polymer exhibits more excellent mechanical strength, which can further improve the stability of the composite separator; and
(3) in the functional resin layer, a mass percentage of the functional polymer is 80% to 95%.

In some embodiments, a mass content of hydrogen fluoride in the electrolyte is less than or equal to 300 ppm.

Hydrogen fluoride itself has certain corrosiveness and has a negative impact on the performance of the secondary battery. At the same time, hydrogen fluoride dissociates hydrogen ions in the electrolyte. After the hydrogen ions exchange ions with the iminodiacetate group, a stable iminodiacetic acid group is formed, which is not conducive to capturing transition metal ions. Therefore, the mass content of hydrogen fluoride in the electrolyte is further regulated to enhance the capture efficiency of the composite separator for transition metal ions.

In some embodiments, components of the electrolyte include an electrolytic salt and a solvent, the solvent includes a cyclic carbonate, and a mass percentage of the cyclic carbonate in the solvent is less than 50%;
optionally, the mass percentage of the cyclic carbonate in the solvent is 5% to 46%.

On one hand, the type of solvent in the electrolyte is adjusted, and the cyclic carbonate has excellent ability to promote the dissociation of the electrolytic salt, which is conducive to improving the conductivity of the electrolyte, and at

the same time, its content is controlled to reduce the viscosity of the electrolyte, further promoting the dissociation of the electrolytic salt, improving the wettability of the electrolyte to the composite separator, and enhancing the capture efficiency of the composite separator for transition metal ions.

Further optionally, the cyclic carbonate includes at least one of ethylene carbonate, vinylene carbonate, propylene carbonate, butylene carbonate, and fluoroethylene carbonate.

In some embodiments, the electrolyte satisfies at least one of the following conditions (1) and (2):

(1) the solvent further includes a chain ester solvent, where

the chain ester solvent is conducive to reducing the viscosity of the electrolyte and further enhancing the ion-conducting ability of the electrolyte, and
optionally, the chain ester solvent includes at least one of dimethyl carbonate, methyl ethyl carbonate, diethyl carbonate, methyl acetate, ethyl acetate, propyl acetate, ethyl propionate, and propyl propionate; and

(2) a concentration of the electrolytic salt is 0.5 mol/L to 2 mol/L.

In some embodiments, components of the electrolyte further include a functional additive; and optionally, a mass of the functional additive accounts for 2% to 15% of a total mass of the electrolyte.

In some embodiments, the functional additive includes at least one of a film-forming additive and a complexing additive;

optionally, the film-forming additive includes at least one of a sulfate-based film-forming additive, a sulfite-based film-forming additive, a sultone-based film-forming additive, a disulfonate-based film-forming additive, an aromatic film-forming additive, an isocyanate-based film-forming additive, a phosphite-based film-forming additive, a phosphate-based film-forming additive, and a borate-based film-forming additive; and
optionally, the complexing additive includes at least one of a nitrile-based complexing additive, a crown ether-based complexing additive, and an oxime salt-based complexing additive.

The film-forming additive can form a protective layer at an interface of the electrode sheet, mitigating the corrosion of the electrolyte. The complexing additive can complex with a transition metal on a surface of an active material, improving the stability of the surface of the active material during the charging and discharging process, and reducing the dissolution of the transition metal caused by surface structure degradation.

In some embodiments, the functional resin layer satisfies at least one of the following conditions (1) and (2):

(1) 1 g of the functional resin layer contains 0.2 mg to 5 mg of the cations; and
(2) a thickness of the functional resin layer is 1 $\mu$m to 50 $\mu$m;

optionally, the thickness of the functional resin layer is 2 $\mu$m to 30 $\mu$m; and
further optionally, the thickness of the functional resin layer is 5 $\mu$m to 20 $\mu$m.

In some embodiments, the secondary battery further includes a positive electrode sheet and a negative electrode sheet, the composite separator is disposed between the positive electrode sheet and the negative electrode sheet, and in the composite separator, the functional resin layer is provided on at least one side surface of the base film that is closer to the positive electrode sheet.

During the charging and discharging process of the secondary battery, relative to the positive electrode sheet, the negative electrode sheet is at a low potential, and under the action of the low potential, the transition metal ions captured by the iminodiacetate group are prone to being attracted by the electric field, leading to a small amount of desorption and deposition on the negative electrode, reducing the adsorption effect of the composite separator on transition metal ions. Therefore, the functional resin layer is provided on at least the surface of the base film that is closer to the positive electrode sheet, enhancing the adsorption effect of the composite separator on transition metal ions.

According to a second aspect, the present application provides an electric apparatus, where the electric apparatus includes the secondary battery of the first aspect.

## BRIEF DESCRIPTION OF DRAWINGS

To describe the technical solutions in the embodiments of the present application more clearly, the following briefly describes the accompanying drawings required for describing the embodiments of the present application. Apparently, the accompanying drawings in the following descriptions show merely some embodiments of the present

application, and persons of ordinary skill in the art may still derive other drawings from the accompanying drawings without creative efforts. In the accompanying drawings:

FIG. 1 is a schematic diagram of an embodiment of a battery cell;
FIG. 2 is an exploded view of FIG. 1;
FIG. 3 is a schematic diagram of an embodiment of a battery pack;
FIG. 4 is an exploded view of FIG. 3; and
FIG. 5 is a schematic diagram of an embodiment of an electric apparatus using the battery as a power source.

Reference signs:

1. battery pack; 2. upper box; 3. lower box; 4. battery cell; 41. housing body; 42. electrode assembly; 43. cover plate; and 5. electric apparatus.

## DESCRIPTION OF EMBODIMENTS

The following describes in detail embodiments of technical solutions of the present application with reference to the accompanying drawings. The following embodiments are merely intended for a clearer description of the technical solutions of the present application and therefore are merely used as examples which do not constitute any limitation on the protection scope of the present application.

In the description of embodiments of the present application, "a plurality of" means at least two unless otherwise specifically stated.

Room temperature in the present application generally refers to 4°C to 30°C, preferably 20 ± 5°C.

In this specification, reference to "embodiment" means that specific features, structures, or characteristics described with reference to the embodiment may be included in at least one embodiment of the present application. The word "embodiment" appearing in various positions in the specification does not necessarily refer to the same embodiment or an independent or alternative embodiment that is exclusive of other embodiments. It is explicitly or implicitly understood by persons skilled in the art the embodiments described herein may be combined with other embodiments.

As described in the background, the transition metal ions dissolved from the secondary battery during the charging and discharging process significantly limit the improvement of the cycling storage performance of the secondary battery. In the traditional technology, attempts are made to introduce chelating functional groups such as iminodiacetate groups that can adsorb transition metal ions into a separator.

Chelating functional groups generally chelate the transition metal ions by dissociating alkali metal cations and exchanging ions with the transition metal ions. However, research found that: in the process of chelating and capturing the transition metal ions, the chelating functional group becomes electronegative after dissociating the cations, which repels the anions of the electrolytic salt in the electrolyte while attracting active ions such as lithium ions, inhibiting the transport of anions and cations between the positive and negative electrodes during the charging and discharging process, leading to increased polarization, which instead leads to the deterioration of the performance of the secondary battery.

Thus, one embodiment of the present application provides a secondary battery, the secondary battery including a composite separator and an electrolyte.

The above composite separator includes a base film and a functional resin layer provided on a surface of the base film, the functional resin layer includes a functional polymer, the functional polymer contains an iminodiacetate group, and cations of the iminodiacetate group include at least one of $Li^+$, $Na^+$, and $K^+$.

At 25°C, a conductivity of the above electrolyte is greater than or equal to 5 mS/cm.

In the above secondary battery, on one hand, a composite separator with a specific structure is used, and the functional resin layer of the composite separator contains an iminodiacetate group capable of directionally capturing transition metal ions, where the iminodiacetate group is fixed on a surface of the composite separator through the functional resin layer, and the cations such as $Li^+$, $Na^+$, and $K^+$ contained in the iminodiacetate group exchange with transition metal ions, thereby fixing the transition metal ions in the electrolyte on the surface of the composite separator, reducing the probability of the transition metal ions at an electrode sheet or dispersed in the electrolyte; on the other hand, in the process where the cations in the iminodiacetate group in the functional resin layer exchange ions with the transition metal ions in the electrolyte, the iminodiacetate group becomes electronegative after dissociating the cations, which repels the anions of the electrolytic salt in the electrolyte while attracting active ions such as lithium ions, inhibiting the transport of anions and cations between the positive and negative electrodes during the charging and discharging process, leading to increased polarization. Therefore, by simultaneously controlling the conductivity of the electrolyte, the ability of the solvent in the electrolyte to dissociate the electrolytic salt is enhanced, promoting the transport of anions and cations in the electrolyte. In this way, the two aspects cooperate to ensure a high ion transport rate while achieving directional capture of transition metal ions, thereby effectively improving the cycling performance and storage stability of the secondary battery.

In some embodiments, at 25°C, the conductivity of the above electrolyte is 5 mS/cm to 9 mS/cm.

In some embodiments, the above iminodiacetate group is represented by formula (1):

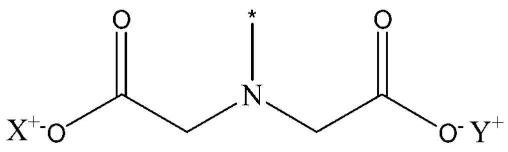

(1)

,

where $X^+$ and $Y^+$ are each independently selected from any one of $H^+$, $Li^+$, $Na^+$, and $K^+$, and $X^+$ and $Y^+$ are not both $H^+$; * represents an attachment site.

In some embodiments, the above functional polymer has the iminodiacetate group grafted onto its side chains.

By grafting the iminodiacetate group onto the side chains, the iminodiacetate group is introduced into the functional polymer, forming a chemical bond connection between the iminodiacetate group and the polymer, making it more stably fixed on the functional resin layer, reducing the probability of its dissociation and dispersion into the electrolyte.

It can be understood that the functional polymer mainly includes a molecular main chain and side chains connected to carbon atoms of the main chain, and the iminodiacetate group is introduced into the functional polymer by grafting the iminodiacetate group onto the side chains.

In some embodiments, a volume-based particle size $D_v50$ of the above functional polymer is 100 nm to 1200 nm.

In some embodiments, the volume-based particle size $D_v50$ of the above functional polymer is 100 nm to 1000 nm.

In some embodiments, the volume-based particle size $D_v50$ of the above functional polymer is 200 nm to 600 nm.

By regulating the volume-based particle size of the functional polymer, on one hand, the polymer maintains a relatively large specific surface area, increasing the sites of the iminodiacetate groups exposed on a surface of the functional resin, thereby enhancing the capture efficiency of the functional resin layer for transition metal ions in the electrolyte; on the other hand, this ensures that after accumulation and aggregation, the functional polymer in the functional resin layer still forms a certain gap, which is equivalent to the functional resin layer retaining a certain porosity, enhancing the ion migration efficiency formed after the composite separator is infiltrated by the electrolyte, thereby further improving the cycling performance of the secondary battery.

In the present application, the above $D_v50$ is: the particle size corresponding to 50% of the volume distribution in the particle size-volume cumulative distribution curve, which can be obtained based on the volume cumulative distribution curve. As an example, it can be measured conveniently by using a laser particle size analyzer in accordance with relevant standards of GB/T19077-2016/ISO 13320:2009, such as the Mastersizer 2000E laser particle size analyzer from Malvern Instruments Ltd., UK.

Referring to the standard process of GB/T19077-2016/ISO 13320:2009, the specific test process is as follows: An appropriate amount of the sample to be tested is taken and added to deionized water, the sample concentration is ensured to have an obscuration of 8% to 12%, while ultrasonication is performed for 5 min to ensure complete dispersion of the sample, and then the sample is measured according to the GB/T19077-2016/ISO13320:2009 standard.

The frequency of ultrasonication is 53 KHz, and the power is 120 W.

In the above "100 nm to 1000 nm", the values include the minimum and maximum values of the range and each value between such minimum and maximum values. Specific examples include but are not limited to the point values in the embodiments and the following point values: 100 nm, 150 nm, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, and 1000 nm; or in a range defined by any two of these values, for example: 100 nm to 150 nm, 100 nm to 250 nm, 100 nm to 350 nm, 100 nm to 450 nm, 100 nm to 550 nm, 100 nm to 650 nm, 100 nm to 750 nm, 100 nm to 850 nm, 100 nm to 950 nm, 200 nm to 250 nm, 200 nm to 350 nm, 200 nm to 450 nm, 200 nm to 550 nm, 200 nm to 650 nm, 200 nm to 750 nm, 200 nm to 850 nm, 200 nm to 950 nm, 300 nm to 350 nm, 300 nm to 450 nm, 300 nm to 550 nm, 300 nm to 650 nm, 300 nm to 750 nm, 300 nm to 850 nm, 300 nm to 950 nm, 400 nm to 450 nm, 400 nm to 550 nm, 400 nm to 650 nm, 400 nm to 750 nm, 400 nm to 850 nm, 400 nm to 950 nm, 500 nm to 550 nm, 500 nm to 650 nm, 500 nm to 750 nm, 500 nm to 850 nm, or 500 nm to 950 nm.

In some embodiments, a preparation raw material of a main chain of the functional polymer includes at least one of an acrylic monomer and styrene.

The acrylic polymer chain or styrene polymer chain has the advantages of high porosity and large specific surface area, and has strong adsorption capacity for the electrolyte, which can make the iminodiacetate group fully contact the electrolyte, quickly capture transition metal ions, reduce the probability of rapid transition metal migration and deposition on the negative electrode. At the same time, good acid and alkali resistance, strong redox stability, and relatively low

swelling and shrinkage are exhibited, which can improve the stability of the composite separator, further improving the performance of the secondary battery.

In some embodiments, the acrylic monomer includes at least one of acrylic acid, a homolog of acrylic acid, and an acrylate compound.

Further, the acrylic monomer has the following structure:

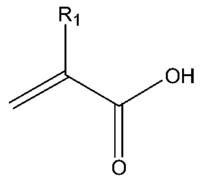

where each $R_1$ is independently selected from a linear alkyl group having 1 to 5 carbon atoms.

In some embodiments, each $R_1$ is independently selected from a linear alkyl group having 1 to 3 carbon atoms.

In some embodiments, the acrylic monomer includes at least one of acrylic acid and methacrylic acid.

In some embodiments, the functional polymer is a crosslinking polymer.

The crosslinking polymer exhibits more excellent mechanical strength, which can further improve the stability of the composite separator.

In some embodiments, in the functional resin layer, a mass percentage of the functional polymer is 80% to 95%.

In the above "80% to 95%", the values include the minimum and maximum values of the range and each value between such minimum and maximum values. Specific examples include but are not limited to the point values in the embodiments and the following point values: 80%, 81%, 82%, 83%, 84%, 85%, 86%, 87%, 88%, 89%, 90%, 91%, 92%, 93%, 94%, and 95%; or in a range defined by any two of these values, for example: 80% to 95%, 83% to 95%, 85% to 95%, or 90% to 95%.

In some embodiments, components of the functional resin layer include a binder.

The binder can further improve the stability of the composite separator.

The binder may be various binders commonly used in the art, including at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, hydrogenated nitrile rubber, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), and fluorine-containing acrylic resin.

In some embodiments, in the functional resin layer, a mass percentage of the binder is 5% to 20%.

In the above "5% to 20%", the values include the minimum and maximum values of the range and each value between such minimum and maximum values. Specific examples include but are not limited to the point values in the embodiments and the following point values: 5%, 6%, 7%, 8%, 9%, 10%, 11%, 12%, 13%, 14%, 15%, 16%, 17%, 18%, 19%, and 20%; or in a range defined by any two of these values, for example: 5% to 20%, 10% to 20%, 15% to 20%, or 5% to 15%.

In some embodiments, a mass content of hydrogen fluoride in the electrolyte is less than or equal to 300 ppm.

Hydrogen fluoride itself has certain corrosiveness and has a negative impact on the performance of the secondary battery. At the same time, hydrogen fluoride dissociates hydrogen ions in the electrolyte. After the hydrogen ions exchange ions with the iminodiacetate group, a stable iminodiacetic acid group is formed, which is not conducive to capturing transition metal ions. Therefore, the mass content of hydrogen fluoride in the electrolyte is further regulated to enhance the capture efficiency of the composite separator for transition metal ions.

In some embodiments, components of the electrolyte include an electrolytic salt and a solvent, the solvent includes a cyclic carbonate, and a mass percentage of the cyclic carbonate in the solvent is less than 50%.

In some embodiments, the mass percentage of the cyclic carbonate in the solvent was 5% to 46%.

On one hand, the type of solvent in the electrolyte is adjusted, and the cyclic carbonate has excellent ability to promote the dissociation of the electrolytic salt, which is conducive to improving the conductivity of the electrolyte, and at the same time, its content is controlled to reduce the viscosity of the electrolyte, further promoting the dissociation of the electrolytic salt, improving the wettability of the electrolyte to the composite separator, and enhancing the capture efficiency of the composite separator for transition metal ions.

In the above "5% to 46%", the values include the minimum and maximum values of the range and each value between such minimum and maximum values. Specific examples include but are not limited to the point values in the embodiments and the following point values: 5%, 6%, 7%, 8%, 9%, 10%, 11%, 12%, 13%, 14%, 15%, 16%, 17%, 18%, 19%, 20%, 21%, 22%, 13%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 45.5%, and 46%; or in a range defined by any two of these values, for example: 5% to

45%, 10% to 45%, 25% to 45%, 15% to 40%, or 20% to 40%.

In some embodiments, the cyclic carbonate includes at least one of ethylene carbonate, vinylene carbonate, propylene carbonate, butylene carbonate, and fluoroethylene carbonate.

In some embodiments, the solvent further includes a chain ester solvent.

The chain ester solvent is conducive to reducing the viscosity of the electrolyte and further enhancing the ion-conducting ability of the electrolyte.

In some embodiments, the chain ester solvent includes at least one of dimethyl carbonate, methyl ethyl carbonate, diethyl carbonate, methyl acetate, ethyl acetate, propyl acetate, ethyl propionate, and propyl propionate.

In some embodiments, the mass percentage of the cyclic carbonate in the solvent is 55% to 95%.

In some embodiments, a concentration of the electrolytic salt is 0.5 mol/L to 2 mol/L.

In some embodiments, components of the electrolyte further include a functional additive; and optionally, a mass of the functional additive accounts for 2% to 15% of a total mass of the electrolyte.

In the above "2% to 15%", the values include the minimum and maximum values of the range and each value between such minimum and maximum values. Specific examples include but are not limited to the point values in the embodiments and the following point values: 2%, 3%, 4%, 5%, 6%, 7%, 8%, 9%, 10%, 11%, 12%, 13%, 14%, and 15%; or in a range defined by any two of these values, for example: 5% to 15%, 10% to 15%, 2% to 10%, or 2% to 5%.

The functional additive in the present application may be any well-known electrolyte additive in the art.

In some embodiments, the above functional additive includes at least one of a film-forming additive and a complexing additive.

The film-forming additive can form a protective layer at an interface of the electrode sheet, mitigating the corrosion of the electrolyte. The complexing additive can complex with a transition metal on a surface of an active material, improving the stability of the surface of the active material during the charging and discharging process, and reducing the dissolution of the transition metal caused by surface structure degradation.

In some embodiments, the above film-forming additive includes at least one of a sulfate-based film-forming additive, a sulfite-based film-forming additive, a sultone-based film-forming additive, a disulfonate-based film-forming additive, an aromatic film-forming additive, an isocyanate-based film-forming additive, a phosphite-based film-forming additive, a phosphate-based film-forming additive, and a borate-based film-forming additive.

In some embodiments, the above film-forming additive includes at least one of 1,3-propane sultone, vinyl sulfate, propylene sulfate, and ethylene sulfite.

In some embodiments, the complexing additive includes at least one of a nitrile-based complexing additive, a crown ether-based complexing additive, and an oxime salt-based complexing additive.

In some embodiments, the complexing additive includes 1,2,3-tris(2-cyanooxy)propane.

In some embodiments, the electrolytic salt may be selected from electrolytic salts commonly used in the art, such as a lithium ion electrolytic salt, a sodium ion electrolytic salt, and a potassium ion electrolytic salt.

In some embodiments, the above electrolytic salt includes a lithium ion electrolytic salt.

As an example, the lithium ion electrolytic salt includes but is not limited to: one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluoro bis(oxalato)phosphate (LiDFOP), and lithium tetrafluoro(oxalato)phosphate (LiTFOP).

In some embodiments, 1 g of the functional resin layer contains 0.2 mg to 5 mg of cations.

In the above "0.2 mg to 5 mg", the values include the minimum and maximum values of the range and each value between such minimum and maximum values. Specific examples include but are not limited to the point values in the embodiments and the following point values: 0.2 mg, 0.5 mg, 1 mg, 1.2 mg, 2 mg, 3 mg, 4 mg, and 5 mg; or in a range defined by any two of these values, for example: 1 mg to 5 mg, 2 mg to 5 mg, 3 mg to 5 mg, or 2 mg to 3 mg.

In some embodiments, a thickness of the functional resin layer is 1 μm to 50 μm.

In some embodiments, the thickness of the functional resin layer is 2 μm to 30 μm.

In some embodiments, the thickness of the functional resin layer is 5 μm to 20 μm.

In the above "1 μm to 50 μm", the values include the minimum and maximum values of the range and each value between such minimum and maximum values. Specific examples include but are not limited to the point values in the embodiments and the following point values: 1 μm, 5 μm, 10 μm, 15 μm, 20 μm, 25 μm, 30 μm, 35 μm, 40 μm, 45 μm, and 50 μm; or in a range defined by any two of these values, for example: 1 μm to 50 μm, 5 μm to 50 μm, 10 μm to 50 μm, 20 μm to 50 μm, 1 μm to 30 μm, 5 μm to 30 μm, 10 μm to 30 μm, 15 μm to 30 μm, 1 μm to 20 μm, 5 μm to 20 μm, 10 μm to 20 μm, or 15 μm to 20 μm.

The thickness of the functional resin layer is further regulated to improve ion transport while maintaining the good capture efficiency of the transition metal ions of the composite separator, further improving the cycling performance of the secondary battery.

The material of the base film in the present application may be any well-known porous structural material in the art

with good chemical stability and mechanical stability.

In some embodiments, the material of the base film includes at least one of glass fiber, non-woven fabric, polyethylene, polypropylene, and polyvinylidene fluoride.

Optionally, a thickness of the base film is 2 μm to 15 μm.

In some embodiments, the above secondary battery further includes a positive electrode sheet and a negative electrode sheet, the composite separator is disposed between the positive electrode sheet and the negative electrode sheet, and in the composite separator, the functional resin layer is provided on at least one side surface of the base film that is closer to the positive electrode sheet.

During the charging and discharging process of the secondary battery, relative to the positive electrode sheet, the negative electrode sheet is at a low potential, and under the action of the low potential, the transition metal ions captured by the iminodiacetate group are prone to being attracted by the electric field, leading to a small amount of desorption and deposition on the negative electrode, reducing the adsorption effect of the composite separator on transition metal ions. Therefore, the functional resin layer is provided on at least the surface of the base film that is closer to the positive electrode sheet, enhancing the adsorption effect of the composite separator on transition metal ions.

It can be understood that the base film has two opposite surfaces in its own thickness direction, and at least the surface that is closer to the positive electrode sheet is provided with the functional resin layer.

The positive electrode sheet and negative electrode sheet in the present application may use various positive electrode sheet and negative electrode sheet systems commonly used in the art. The polarity of the positive electrode sheet and negative electrode sheet is exemplified below.

Positive electrode sheet: The positive electrode sheet includes a current collector and a positive electrode active layer carried on a surface of the current collector.

The component of the positive electrode active layer includes a positive electrode active material. The positive electrode active material may be a positive electrode active material commonly used in the art, including but not limited to: a positive electrode active material for a lithium-ion battery, a positive electrode active material for a sodium-ion battery, and a positive electrode active material for a potassium-ion battery.

The positive electrode active material for the lithium-ion battery, the positive electrode active material for the sodium-ion battery, and the positive electrode active material for the potassium-ion battery are hereinafter referred to as lithium ion active material, sodium ion active material, and potassium ion active material, respectively.

Further, as an example, the lithium ion active material may include at least one of the following materials: olivine-structured lithium-containing phosphate, lithium transition metal oxide, and respective modified compounds thereof. However, the present application is not limited to these materials, and other conventional materials that can be used as battery positive electrode active materials may also be used. One type of these positive electrode active materials may be used alone, or two or more types may be used in combination. Examples of lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), $LiNi_{0.8}Co_{0.1}Mn_{0.1}O_2$ (NCM811 for short), lithium nickel cobalt aluminum oxide (for example, $LiNi_{0.8}Co_{0.15}Al_{0.05}O_2$)), and modified compounds thereof.

Examples of the olivine-structured lithium-containing phosphate may include but are not limited to at least one of lithium iron phosphate (for example, $LiFePO_4$, LFP for short), lithium manganese phosphate (for example, $LiMnPO_4$), and lithium manganese iron phosphate. In any embodiment of this application, the molecular formula of the lithium-ion active material is $LiFe_xMn_{(1-x)}PO_4$, x being any number from 0 to 1.

It can be understood that when x is 0, $LiFe_xMn_{(1-x)}PO_4$ is $LiMnPO_4$, lithium manganese phosphate, and when x is 1, $LiFe_xMn_{(1-x)}PO_4$ is $LiFePO_4$, lithium iron phosphate (LFP).

It should be noted that the lithium content in the above exemplified positive electrode materials refers to the content when not in use, and during the use of the battery, repeated charging and discharging is performed, and Li in the positive electrode active material changes during the charging and discharging process, that is, the molar subscript of Li in the positive electrode active material in the battery product does not always remain at 1 but varies. Further, the range of variation may be (0 to 1.2).

For example, $LiFe_xMn_{(1-x)}PO_4$ may be further expressed as $Li_yFe_xMn_{(1-x)}PO_4$, where y is 0 to 1.1.

For example, for the ternary material $Li_y(Ni_aCo_bMn_c)_{1-d}M_dO_{2-x}A_x$, y is 0.2 to 1.2, a + b + c = 1, $0 \leq d \leq 1$, and $0 \leq x < 2$; and M is one or more of Zr, Sr, B, Ti, Mg, Sn, and Al, and A is one or more of S, N, F, Cl, Br, and I.

During the charging and discharging process of the battery, Li deintercalation and consumption occur, and the molar content of Li is different when the battery is discharged to different states. The above limitation on y includes the molar content of Li under different charging and discharging states of the battery; and further, the battery voltage is generally between 2 V to 5 V.

For example, the sodium-ion active material may include at least one of the following materials: sodium transition

metal oxide, polyanionic compound, and Prussian blue compound. However, the present application is not limited to these materials, and may also use other conventional well-known materials that can be used as positive electrode active materials for sodium-ion batteries.

In an optional technical solution of the present application, in the sodium transition metal oxide, the transition metal includes at least one of Mn, Fe, Ni, Co, Cr, Cu, Ti, Zn, V, Zr, and Ce. The sodium transition metal oxide is, for example, $Na_xMO_2$, where M includes at least one of Ti, V, Mn, Co, Ni, Fe, Cr, and Cu, and $0 < x \leq 1$.

In an optional technical solution of the present application, the polyanionic compound may be a compound having sodium ions, transition metal ions, and tetrahedron $(YO_4)^{n-}$ anion units. The transition metal includes at least one of Mn, Fe, Ni, Co, Cr, Cu, Ti, Zn, V, Zr, and Ce; Y includes at least one of P, S, and Si; and n represents valence of $(YO_4)^{n-}$.

The polyanionic compound may alternatively be a compound having sodium ions, transition metal ions, tetrahedron $(YO_4)^{n-}$ anion units, and halogen anions. The transition metal includes at least one of Mn, Fe, Ni, Co, Cr, Cu, Ti, Zn, V, Zr, and Ce; Y includes at least one of P, S, and Si, and n represents valence of $(YO_4)^{n-}$; and the halogen may be at least one of F, Cl, and Br.

The polyanionic compound may alternatively be a compound having sodium ions, tetrahedron $(YO_4)^{n-}$ anion units, polyhedral units $(ZO_y)^{m+}$, and optional halogen anions. Y includes at least one of P, S, and Si, and n represents valence of $(YO_4)^{n-}$; Z represents transition metal and includes at least one of Mn, Fe, Ni, Co, Cr, Cu, Ti, Zn, V, Zr, and Ce, and m represents valence of $(ZO_y)^{m+}$; and the halogen may be at least one of F, Cl, and Br.

The polyanionic compound is, for example, at least one of $NaFePO_4$, $Na_3V_2(PO_4)_3$ (sodium vanadium phosphate, NVP for short), $Na_4Fe_3(PO_4)_2(P_2O_7)$ (NFPP), $NaM1PO_4F$, and $Na_3(VO_y)_2(PO_4)_2F_{(3-2y)}$.

M1 is at least one of V, Fe, Mn, and Ni, and $0 \leq y \leq 1$.

The Prussian blue compound may be a compound having sodium ions, transition metal ions, and cyanogen ions $(CN^-)$. The transition metal includes at least one of Mn, Fe, Ni, Co, Cr, Cu, Ti, Zn, V, Zr, and Ce. The Prussian blue compound is, for example, $Na_aM2_bM3_c(CN)_6$, where M2 and M3 are each independently selected from at least one of Ni, Cu, Fe, Mn, Co, and Zn, $0 < a \leq 2$, $0 < b < 1$, and $0 < c < 1$.

In any embodiment of the present application, in the positive electrode active layer, a mass percentage of the positive electrode active material is 70% to 99.8%.

In any embodiment of the present application, components of the positive electrode active layer further include a conductive agent and a binder.

The conductive agent may be a conductive agent commonly used in the art, including but not limited to: at least one of graphite, carbon nanotubes, nanofiber, carbon black, and graphene. Specifically, the conductive agent may include at least one of conductive carbon black (super pll, SP for short), conductive graphite SFG-6, conductive graphite KS-6, acetylene black, branched-structure super conductive carbon black Ketjen black (ECP), vapor-grown carbon fiber (VGCF), carbon nanotubes (CNTs), graphene, and composite conductive agents thereof.

The binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, hydrogenated nitrile rubber, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), and fluorine-containing acrylic resin.

In some embodiments, in the positive electrode active layer, a mass percentage of the conductive agent is 1% to 20%.

In some embodiments, in the positive electrode active layer, a mass percentage of the binder is 1% to 10%.

In any embodiment of the present application, the current collector may be a metal foil current collector or a composite current collector. For example, aluminum foil may be used as the metal foil. The composite current collector may include a polymer matrix and a metal layer formed on at least one surface of the polymer matrix. The composite current collector may be formed by forming a metal material on a polymer material matrix.

In some embodiments, the metal material is selected from any one of aluminum, aluminum alloy, nickel, nickel alloy, titanium, titanium alloy, silver, and silver alloy.

In some embodiments, the polymer material matrix includes at least one of polypropylene (PP), polyethylene terephthalate (PET), polybutylene terephthalate (PBT), polystyrene (PS), and polyethylene (PE).

In any embodiment of the present application, the positive electrode sheet may be prepared in the following manner: the foregoing constituents used for preparing the positive electrode sheet are dispersed in an organic solvent to form a positive electrode slurry; and the positive electrode slurry is applied onto the positive electrode current collector, followed by processes such as drying and cold pressing to produce the positive electrode sheet.

In some embodiments, a solid content of the positive electrode slurry is 40wt% to 80wt%, and the viscosity at 25°C is adjusted to 5000 mPa·s to 25000 mPa·s.

In some embodiments, the organic solvent includes but is not limited to: N-methylpyrrolidone.

In some embodiments, a surface density of the positive electrode active material contained in the positive electrode sheet is 0.018 $g/cm^2$ to 0.05 $g/cm^2$.

Surface density of the positive electrode active material = mass of the positive electrode active material / area of the positive electrode sheet.

Negative electrode sheet: The negative electrode sheet may use various negative electrode sheet systems of secondary batteries commonly used in the art. Lithium-ion secondary batteries and lithium metal secondary batteries are exemplified below, but not limited to the following types.

In some embodiments, the secondary battery is a lithium metal secondary battery, and the negative electrode sheet may be a negative electrode sheet known in the art that can be used for lithium metal batteries.

In some embodiments, the negative electrode sheet directly uses a lithium-containing metal sheet.

In another embodiment, the negative electrode sheet includes a stacked lithium-containing metal layer and a conductive layer.

Further, the lithium-containing technology in the lithium-containing metal sheet and the lithium-containing metal layer may be lithium metal or an alloy formed by lithium metal and other metals or non-metal elements.

Further, the other metals include at least one of tin (Sn), zinc (Zn), aluminum (Al), magnesium (Mg), silver (Ag), gold (Au), gallium (Ga), indium (In), and platinum (Pt). The non-metal element includes at least one of boron (B), carbon (C), and silicon (Si).

In some embodiments, the conductive layer may be a copper foil.

In any embodiment of the present application, the above negative electrode sheet may be prepared in the following manner: the lithium-containing metal sheet is directly pressed to obtain a negative electrode sheet, or the above lithium-containing metal layer and conductive layer are stacked and pressed to obtain a negative electrode sheet.

In some embodiments, the secondary battery is a lithium-ion secondary battery, and the negative electrode sheet may be a negative electrode sheet known in the art that can be used for lithium-ion secondary batteries.

In some embodiments, the negative electrode sheet includes a current collector and a negative electrode active layer carried on a surface of the current collector.

The component of the negative electrode active layer includes a negative electrode active material.

The above negative electrode active material may be a negative electrode active material commonly used in the present application.

In any embodiment of the present application, the above negative electrode active material includes at least one of mesocarbon microbeads, graphite, glassy carbon, carbon nanotubes, a carbon-carbon composite material, carbon fibers, hard carbon, soft carbon, a silicon-based material, a tin-based material, a magnesium-based material, and an iron-based material.

Optionally, specific examples of the above negative electrode active material include but are not limited to: at least one of mesocarbon microbeads, natural graphite, artificial graphite, graphene, glassy carbon, carbon nanotubes, carbon fibers, hard carbon, soft carbon, iron oxide, tin oxide, silicon oxide, magnesium oxide, a silicon-carbon composite, lithium metal, and a lithium metal alloy.

In any embodiment of the present application, a mass percentage of the above negative electrode active material in the negative electrode active layer is 70% to 100%.

In any embodiment of the present application, the component of the above negative electrode active layer further includes a negative electrode conductive agent and a negative electrode binder.

In any embodiment of the present application, the above negative electrode conductive agent may be a conductive material commonly used in the art, including but not limited to: at least one of graphite, carbon nanotubes, nanofibers, carbon black, and graphene. Specifically, the negative electrode conductive agent may include at least one of conductive carbon black (super pll, SP for short), conductive graphite SFG-6, conductive graphite KS-6, acetylene black, branched-structure super conductive carbon black Ketjen black (ECP), vapor-grown carbon fiber (VGCF), carbon nanotubes (CNTs), graphene, and composite conductive agents thereof.

In some embodiments, based on a total weight of the negative electrode active layer, a weight ratio of the negative electrode conductive agent in the negative electrode active layer is 0 to 20wt%.

The above negative electrode binder may be a binder commonly used in the art, and may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, based on the total weight of the negative electrode active layer, a weight ratio of the negative electrode binder in the negative electrode active layer is 0 to 30wt%.

In any embodiment of the present application, the negative electrode active layer optionally further includes other auxiliaries, such as a thickener, for example, sodium carboxymethyl cellulose (CMC-Na). Based on the total weight of the negative electrode active layer, a weight ratio of the other auxiliaries in the negative electrode active layer is 0 to 15wt%.

In any embodiment of the present application, the current collector in the negative electrode sheet may be a metal foil or a composite current collector. For example, copper foil may be used as the metal foil.

The composite current collector may include a polymer matrix and a metal layer formed on at least one surface of the polymer matrix. The composite current collector may be formed by forming a metal material on a polymer material

matrix.

In some embodiments, the metal material is selected from any one of aluminum, aluminum alloy, nickel, nickel alloy, titanium, titanium alloy, silver, and silver alloy.

In some embodiments, the polymer material matrix includes at least one of polypropylene (PP), polyethylene terephthalate (PET), polybutylene terephthalate (PBT), polystyrene (PS), and polyethylene (PE).

In any embodiment of the present application, the negative electrode sheet may be prepared in the following manner: the foregoing constituents used for preparing the negative electrode sheet, for example, the negative electrode active material, the conductive agent, the binder, and any other constituent, are dispersed in a solvent to produce a negative electrode slurry; and the negative electrode slurry is applied onto the negative electrode current collector, followed by processes such as drying and cold pressing to obtain the negative electrode sheet.

In some embodiments, the above solvent includes but is not limited to: water.

In some embodiments, a solid content of the negative electrode slurry is 30wt% to 70wt%, and the viscosity at 25°C is adjusted to 2000 mPa·s to 10000 mPa·s.

In some embodiments, a surface density of the negative electrode active material contained in the negative electrode sheet is 0.005 g/cm$^2$ to 0.03 g/cm$^2$.

Surface density of the negative electrode active material = mass of the negative electrode active material / area of the negative electrode sheet.

The shape of the secondary battery of the present application may be cylindrical, rectangular, or of any other shapes. For example, FIG. 1 is a battery cell 4 of a rectangular secondary battery as an example.

In some embodiments, referring to FIG. 2, a housing may include a housing body 41 and a cover plate 43. The housing body 41 may include a bottom plate and a side plate connected to the bottom plate, and the bottom plate and the side plate enclose to form an accommodating cavity. The housing body 41 has an opening communicated with the accommodating cavity, and the cover plate 43 may cover the opening to close the accommodating cavity.

The positive electrode sheet, negative electrode sheet, and separator may form an electrode assembly 42 through a winding process or a stacking process. The electrode assembly 42 is encapsulated in the accommodating cavity. The electrolyte is infiltrated in the electrode assembly 42. One or more electrode assemblies 42 may be contained in the battery cell 4, which may be adjusted according to needs.

The secondary battery includes one or more battery cells 4.

The secondary battery may be a battery module or a battery pack; and the battery module or battery pack includes at least one battery cell. One or more battery cells 4 may be contained in the battery module, and those of ordinary skill in the art may select an appropriate number according to the application and capacity of the battery module.

FIG. 3 and FIG. 4 are a battery pack 1 as an example. The battery pack 1 includes a battery box and one or more batteries 4 provided in the battery box. The battery box includes an upper box 2 and a lower box 3, and the upper box 2 may cover the lower box 3 and form a closed space for placing the battery cells 4.

Multiple batteries 4 may be arranged in the battery box in any manner.

The present application also provided an electric apparatus, where the electric apparatus includes the above secondary battery.

Further, in the above electric apparatus, the secondary battery may be present in a form of a battery cell or may be further assembled into a form of a battery pack.

The above battery or the battery pack assembled therefrom may be used as a power source for the electric apparatus or an energy storage unit of the electric apparatus.

The above electric apparatus may include but is not limited to a mobile device, an electric vehicle, an electric train, a ship, a satellite, or an energy storage system.

In some embodiments, the mobile device may be a mobile phone or a notebook computer.

In some embodiments, the electric vehicle includes but is not limited to: a battery electric vehicle, a hybrid electric vehicle, a plug-in hybrid electric vehicle, an electric bicycle, an electric scooter, an electric golf vehicle, or an electric truck.

FIG. 5 is an electric apparatus 5 as an example. The electric apparatus 5 is a battery electric vehicle, a hybrid electric vehicle, or a plug-in hybrid electric vehicle. To meet the high power and high energy density requirements of the secondary battery for the electric apparatus 5, a battery pack form may be used.

In another example, the electric apparatus may be a mobile phone, a tablet computer, a notebook computer, or the like. Such apparatus is generally required to be light and thin and may use a battery as its power source.

The following describes the present application with reference to specific examples, but the present application is not limited to the following specific examples. It should be understood that the appended claims summarize the scope of the present application, and persons skilled in the art, under guidance of the conception of the present application, should realize that certain changes made to the embodiments of the present application all fall within the spirit and scope of the claims of the present application.

The following are specific embodiments.

Example 1

(1) Preparation of composite separator:

S1: $Na^+$-type chelating resin (model CH-90) was used as the functional polymer.
The functional polymer was subjected to laser particle size analysis using a Microtrac MRB S3500 series (Microtrac MRB S3500), and the sample was measured in accordance with the GB/T19077-2016/ISO13320:2009 standard. The specific test process was: 2 g of the functional polymer was taken and added to 20 mL of deionized water, ultrasonicated for 5 min to ensure complete dispersion of the sample, and then the dispersion liquid was placed in a sample cell for testing to obtain the particle size corresponding to 50% of the volume distribution in the particle size-volume cumulative distribution curve as $D_v50$.
The functional polymer was tested by infrared spectroscopy, and the main chain structure iminodiacetate group was determined according to the characteristic peaks. Specifically, the model of the infrared spectroscopy tester used was: Bruker ALPHA, with a wavelength range of 400 $cm^{-1}$ to 4000 $cm^{-1}$.
S2: functional polymer particles ($D_v50$ = 500 nm) and binder polyvinylidene fluoride were mixed at a mass ratio of 9:1, then N-methylpyrrolidone was added, and the mixture was stirred and dispersed to prepare a functional resin slurry.
The above functional resin slurry was applied onto a PE base film with a thickness of 8 $\mu$m by single-sided coating, and the flow rate of the slurry and the coating speed were controlled so that the coating thickness reached a predetermined thickness. After coating, drying was performed to form the functional resin layer, and slitting was performed to obtain the composite separator.
The thickness of the functional resin layer in the composite separator was tested using a micrometer, and the steps were as follows:
First, the micrometer was calibrated, then the composite separator was placed between the two anvils, the sleeve was gently rotated until a sound appeared, the reading was recorded as the thickness, and the thickness of the functional resin layer was obtained by subtracting the thickness of the base film from the thickness of the composite separator, recorded as H. For details, refer to Table 1.
The mass of cations ($Li^+$, $Na^+$, and $K^+$) contained in the unit mass functional resin layer was tested, and the specific test was as follows:
At room temperature of 25°C, the functional resin layer was soaked in a 5% wt hydrochloric acid aqueous solution for 24 h, where the functional resin layer and the hydrochloric acid solution were mixed at a mass ratio of 1:3. After soaking, the mixture was filtrated and the filtrate was collected, and the concentration of cations therein was detected by inductively coupled plasma-atomic emission spectrometry. The mass of cations contained in the unit mass (1 g) functional resin layer was calculated and recorded as Y1.

(2) Preparation of electrolyte

S1: In a glove box full of argon (moisture < 10 ppm, and oxygen < 10 ppm), ethylene carbonate (EC), propylene carbonate (PC), and methyl ethyl carbonate (EMC) were uniformly mixed at a mass ratio of 10:5:85 to obtain a mixed solvent, then fluoroethylene carbonate (FEC) accounting for 8wt% of the total mass of the electrolyte was added, then additives 1,2,3-tris(2-cyanooxy)propane accounting for 2wt% of the total mass of the electrolyte and 1,3-propane sultone accounting for 2wt% of the total mass of the electrolyte were added respectively, and finally lithium hexafluorophosphate was slowly added until the molar concentration of lithium hexafluorophosphate was 1 mol/L to obtain the electrolyte.
The solvent of the electrolyte included ethylene carbonate (EC), propylene carbonate (PC), methyl ethyl carbonate (EMC), and fluoroethylene carbonate (FEC). Based on the total mass of the solvent, the mass percentage of the cyclic carbonate (ethylene carbonate, propylene carbonate, and fluoroethylene carbonate) was recorded as Y2.
The electrolyte was stored in an environment at 25°C for 7 days to prepare the secondary battery.
S2: The conductivity of the electrolyte was tested in accordance with page 5 of the industry standard HG/T4067-2015 "Lithium Hexafluorophosphate Electrolyte", and the test temperature was 25°C.
S3: The content of hydrogen fluoride in the electrolyte was tested and recorded as Y3.
The hydrogen fluoride in the electrolyte was measured by instruments and methods well-known in the art. For example, hydrogen fluoride was measured in accordance with pages 7 to 8 of the national standard GB/T19282-2014 "Analysis Method for Lithium Hexafluorophosphate Products" or pages 3 to 5 of the industry standard SJT 11723-2018 "Electrolyte for Lithium Ion Batteries". The specific test steps were as follows:
About 20 g of the electrolyte sample to be tested was weighed by the subtraction method, accurate to 0.01 g; the sample was quickly poured into a beaker containing 100 mL of ice-water mixture [50 g of ice cubes ($d_{max}$ < 2 cm) and 30 mL of ice water (temperature ≤ 4°C)], 10 drops of bromothymol blue indicator were added, and titrated quickly with sodium hydroxide standard titration solution until the solution turned blue, which was the endpoint. At the endpoint, ice cubes should still remain in the solution.

The analysis process should be completed within 20s. At the same time, a blank test was performed, and the blank test solution was the same as the test solution in the type and amount of other added reagents except no sample was added.

The free acid content in the electrolyte was generally expressed in terms of the mass fraction of hydrogen fluoride, and the value was expressed in mg/kg.

The content Y3 of hydrogen fluoride was calculated by the following formula:

$$Y3 = (V - V_0) \times c \times M / (m \times 10^{-3}),$$

where V was the volume of sodium hydroxide standard titration solution consumed by the titration test solution, in milliliters (mL); $V_0$ was the volume of sodium hydroxide standard titration solution consumed by the titration blank test solution, in milliliters (mL); c was the concentration of the sodium hydroxide standard titration solution, in moles per liter (mol/L); and

M was the molar mass of hydrogen fluoride, in grams per mole (g/mol) (M = 20.01); and m was the mass of the sample, in grams (g).

The arithmetic mean of the parallel measurement results was taken as the measurement result according to the formula, and the ratio of the absolute difference of the two parallel measurement results to the arithmetic mean was not greater than 20%.

(3) Preparation of negative electrode sheet

A negative electrode active material (artificial graphite), a conductive agent (conductive carbon black), a binder (styrene-butadiene rubber (SBR)), and a thickener (sodium carboxymethyl cellulose) were mixed at a mass ratio of 96:1:2:1, deionized water was added, and the mixture was stirred and dispersed to prepare a negative electrode slurry.

The negative electrode slurry was applied onto a Cu foil, after two sides were completed, drying was performed to form the negative electrode active layer, and cold pressing, slitting, and sheet making were performed to obtain the negative electrode sheet. The coating weight of the negative electrode active layer was 0.12 g/1540.25 $mm^2$, and the coating compaction density was 1.7 $g/cm^3$.

(4) Preparation of positive electrode sheet

A positive electrode active material ($LiCoO_2$), a conductive agent (conductive carbon black), and a binder (polyvinylidene fluoride) were mixed at a mass ratio of 97:1:2, then N-methylpyrrolidone was added, and the mixture was stirred and dispersed to form a positive electrode slurry.

The positive electrode slurry was applied onto an aluminum foil, after two sides were coated, drying was performed to form the positive electrode active layer, and cold pressing and slitting were performed to prepare the positive electrode sheet. The coating weight of the positive electrode active layer was 0.3 g/1540.25 $mm^2$, and the coating compaction density was 4.2 $g/cm^3$.

(5) Assembly of secondary battery: The positive electrode sheet, composite separator, and negative electrode sheet were stacked in order, where the functional resin layer on the composite separator faced the positive electrode sheet, to prepare an electrode assembly.

The electrode assembly was placed in an outer package, the above electrolyte was injected, the injection coefficient was 2.5 g/mAh, and the electrode assembly was subjected to processes such as sealing, electrolyte injection, formation, and degassing to obtain a lithium-ion secondary battery.

(6) Performance testing of secondary battery:

1. Cycling test of battery at 25°C

The secondary batteries prepared in the examples and comparative examples were subjected to the first charge and discharge at 25°C, and the process was as follows: at 25°C, the secondary battery was charged to 4.45 V at a constant current of 0.33C after left standing for 30 min, and continued to charge at a constant voltage until the current was less than or equal to 0.05C; then the secondary battery was discharged to 2.5 V at a constant current of 0.33C, and the discharge capacity of the first cycle C1 was recorded; then, the battery was subjected to continuous charge and discharge cycles at 0.33C1/0.33C1 with a voltage range of 2.5 V to 4.45 V, and the discharge capacity after 1000 cycles was recorded as C1000, and the capacity retention rate P1000=C1000/C1×100%.

For specific results, refer to Table 1.

2. Storage capacity retention rate test of battery at 45°C

At 25°C, the batteries of the above examples and comparative examples were charged at a constant current of 0.33C to a voltage of 4.45 V, then charged at a constant voltage of 4.45 V until the current was less than or equal to 0.05C; the battery was discharged to a voltage of 2.5 V at a constant current of 0.33C, and the actual discharge capacity of the battery was recorded as C0. At 25°C, the battery was further charged to a voltage of 4.45 V at a constant current of 0.33C0, then charged at a constant voltage of 4.45 V until the current was less than or equal to 0.05C0. At this time, the battery was in a fully charged state. The fully charged battery was placed in a thermostat at 45°C and stored for 180 days, and then the battery was taken out for capacity testing.
The capacity retention rate after the battery was stored at 45°C for 180 days = (discharge capacity after the battery was stored for 180 days / actual discharge capacity C0 of the battery) × 100%. The capacity retention rate P180 was the capacity retention rate after storage for 180 days. For details, refer to Table 1.

3. Deposition test for transition metal Co

The batteries of the above examples and comparative examples were discharged to 2.5 V at a constant current of 0.33C, transferred to a glove box for disassembly, and the negative electrode sheet was retained. The negative electrode sheet was soaked with methyl formate at a mass ratio of 10:1, and methyl formate was replaced every two hours, replaced twice, after washing, the negative electrode sheet was transferred to a vacuum drying oven and dried in vacuum at 80°C for 24 h. About 2 g of the negative electrode sheet was cut and digested into a solution with concentrated nitric acid, and the mass content of transition metal Co in the solution was tested with an inductively coupled plasma emission spectrometer (icp-oes) (model iCAP 7400), and then converted to obtain the deposition amount of transition metal Co deposited on the entire negative electrode sheet.

Examples 2 to 3

Examples 2 to 3 were basically the same as Example 1, except that in step (1) preparation of composite separator, the type of functional polymer was different from that in Example 1, where $Li^+$-type porous resin was used in Example 2, and $K^+$-type porous resin was used in Example 3.
The $Li^+$-type porous resin used in Example 2 was obtained by immersing the $Na^+$-type chelating resin (model CH-90) used in Example 1 in a 10wt% LiOH aqueous solution, where the mass ratio of the $Na^+$-type chelating resin to the LiOH aqueous solution was 1:10.
The $K^+$-type porous resin used in Example 2 was obtained by immersing the $Na^+$-type chelating resin (model CH-90) used in Example 1 in a 10wt% KOH aqueous solution, where the mass ratio of the $Na^+$-type chelating resin to the KOH aqueous solution was 1:10.
The other steps and conditions were the same as those in Example 1. The test results were shown in Table 1.

Examples 4 to 7

Examples 4 to 7 were basically the same as Example 1, except that the storage time of the electrolyte was different from that in Example 1, the storage times of the electrolytes in Examples 4 to 7 were 0 days, 15 days, 30 days, and 60 days, respectively, so that the content of hydrogen fluoride in the electrolyte was different from that in Example 1. For details, refer to Table 1.
The other steps and conditions were the same as those in Example 1. The test results were shown in Table 1.

Example 8

Example 8 was basically the same as Example 1, except that in step (1) preparation of composite separator, the type of functional polymer was different from that in Example 1, where $Na^+$-type polyacrylic acid porous resin was used in Example 8.
The other steps and conditions were the same as those in Example 1. The test results were shown in Table 1.

Examples 9 to 13

Examples 9 to 13 were basically the same as Example 1, except that in step (1) preparation of composite separator, the particle size $D_v50$ of the functional polymer was different from that in Example 1. For details, refer to Table 1.

The other steps and conditions were the same as those in Example 1. The test results were shown in Table 1.

Examples 14 to 19

Examples 14 to 19 were basically the same as Example 1, except that in step (1) preparation of composite separator, the thickness H of the functional resin layer was different from that in Example 1. For details, refer to Table 1.
The other steps and conditions were the same as those in Example 1. The test results were shown in Table 1.

Examples 20 to 21

Examples 20 to 21 were basically the same as Example 1, except that in step (2) preparation of electrolyte, the concentration of lithium hexafluorophosphate was different from that in Example 1. The concentration of lithium hexafluorophosphate was 0.5 mol/L in Example 20, and the concentration of lithium hexafluorophosphate was 2 mol/L in Example 21.
The other steps and conditions were the same as those in Example 1. The test results were shown in Table 1.

Examples 22 to 25

Examples 22 to 25 were basically the same as Example 1, except that in step (2) preparation of electrolyte, the ratio of the solvent was different from that in Example 1, so that the value of Y2 was different from that in Example 1. For details, refer to Table 1.
In Example 22, ethylene carbonate (EC), propylene carbonate (PC), and methyl ethyl carbonate (EMC) were uniformly mixed at a mass ratio of 15:10:75 to obtain a mixed solvent, and the mass percentage of the solvent fluoroethylene carbonate (FEC) in the electrolyte was 8%.
In Example 23, ethylene carbonate (EC), propylene carbonate (PC), and methyl ethyl carbonate (EMC) were uniformly mixed at a mass ratio of 5:0:95 to obtain a mixed solvent, and the mass percentage of the solvent fluoroethylene carbonate (FEC) in the electrolyte was 5%.
In Example 24, an equal mass of methyl ethyl carbonate (EMC) was used to replace the mixed solvent of ethylene carbonate (EC), propylene carbonate (PC), and methyl ethyl carbonate (EMC) in Example 1, and the mass percentage of the solvent fluoroethylene carbonate (FEC) in the electrolyte was 5%.
In Example 25, ethylene carbonate (EC), propylene carbonate (PC), and methyl ethyl carbonate (EMC) were uniformly mixed at a mass ratio of 25:15:60 to obtain a mixed solvent, and the mass percentage of the solvent fluoroethylene carbonate (FEC) in the electrolyte was 8%.
The other steps and conditions were the same as those in Example 1. The test results were shown in Table 1.

Example 26

Example 26 was basically the same as Example 1, except that in the steps of assembly of the secondary battery, the functional resin layer on the composite separator faced the negative electrode sheet.
The other steps and conditions were the same as those in Example 1. The test results were shown in Table 1.

Comparative Example 1

Comparative Example 1 was basically the same as Example 1, except that in the steps of assembly of the secondary battery, a PE base film was directly used instead of the composite separator, and the thickness of the PE base film was the same as the thickness of the base film of the composite separator in Example 1. For details, refer to Table 1.
The other steps and conditions were the same as those in Example 1. The test results were shown in Table 1.

Comparative Example 2

Comparative Example 2 was basically the same as Example 1, except that in step (2) preparation of electrolyte, the value of Y2 was different from that in Example 1. Specifically, ethylene carbonate (EC), propylene carbonate (PC), and methyl ethyl carbonate (EMC) were uniformly mixed at a mass ratio of 30:20:50 to obtain a mixed solvent, and the mass percentage of the solvent fluoroethylene carbonate (FEC) in the electrolyte was 8%. For details, refer to Table 1.
The other steps and conditions were the same as those in Example 1. The test results were shown in Table 1.
The relevant parameters and performance results of each example and comparative example were shown in Table 1. The thickness of the functional resin layer was recorded as H; the mass of cations contained in the unit mass (1 g) functional resin layer was recorded as Y1 (mg/g); in the electrolyte, based on the total mass of the solvent, the mass

percentage of the cyclic carbonate was recorded as Y2; and the content of hydrogen fluoride in the electrolyte was recorded as Y3.

**Table 1**

| | Functional polymer | | | Functional resin layer | | Electrolyte | | | Secondary battery | | |
|---|---|---|---|---|---|---|---|---|---|---|---|
| | Cation | Main chain | $D_v$ (nm) | Y1 (mg/g) | H (μm) | Y3 (ppm) | Y2 (%) | Conductivity (mS/cm) | P1000 (%) | P180 (%) | Deposition amount of Co (ppm) |
| Example 1 | $Na^+$ | Polystyrene | 400 | 1.72 | 10 | 82 | 23.14% | 7.82 | 88.92 | 82.95 | 1013 |
| Example 2 | $Li^+$ | Polystyrene | 400 | 0.85 | 10 | 82 | 23.14% | 7.82 | 89.23 | 82.57 | 987 |
| Example 3 | $K^+$ | Polystyrene | 400 | 2.43 | 10 | 82 | 23.14% | 7.82 | 89.32 | 82.53 | 911 |
| Example 4 | $Na^+$ | Polystyrene | 400 | 1.72 | 10 | 45 | 23.14% | 7.82 | 89.17 | 83.77 | 821 |
| Example 5 | $Na^+$ | Polystyrene | 400 | 1.72 | 10 | 121 | 23.14% | 7.82 | 87.44 | 81.73 | 1139 |
| Example 6 | $Na^+$ | Polystyrene | 400 | 1.72 | 10 | 196 | 23.14% | 7.82 | 87.17 | 81.61 | 1215 |
| Example 7 | $Na^+$ | Polystyrene | 400 | 1.72 | 10 | 298 | 23.14% | 7.82 | 84.14 | 79.01 | 1576 |
| Example 8 | $Na^+$ | Polyacrylic acid | 400 | 2.55 | 10 | 82 | 23.14% | 7.82 | 87.42 | 81.61 | 1153 |
| Example 9 | $Na^+$ | Polystyrene | 100 | 1.72 | 10 | 82 | 23.14% | 7.82 | 86.99 | 83.94 | 735 |
| Example 10 | $Na^+$ | Polystyrene | 200 | 1.72 | 10 | 82 | 23.14% | 7.82 | 88.61 | 83.12 | 875 |
| Example 11 | $Na^+$ | Polystyrene | 600 | 1.72 | 10 | 82 | 23.14% | 7.82 | 88.84 | 82.17 | 1101 |
| Example 12 | $Na^+$ | Polystyrene | 1000 | 1.72 | 10 | 82 | 23.14% | 7.82 | 86.53 | 80.13 | 1377 |
| Example 13 | $Na^+$ | Polystyrene | 1200 | 1.72 | 10 | 82 | 23.14% | 7.82 | 82.13 | 76.12 | 1817 |
| Example 14 | $Na^+$ | Polystyrene | 400 | 1.72 | 2 | 82 | 23.14% | 7.82 | 87.62 | 77.53 | 1629 |
| Example 15 | $Na^+$ | Polystyrene | 400 | 1.72 | 5 | 82 | 23.14% | 7.82 | 87.9 | 79.05 | 1291 |
| Example 16 | $Na^+$ | Polystyrene | 400 | 1.72 | 20 | 82 | 23.14% | 7.82 | 85.44 | 84.25 | 654 |
| Example 17 | $Na^+$ | Polystyrene | 400 | 1.72 | 30 | 82 | 23.14% | 7.82 | 84.21 | 84.34 | 663 |
| Example 18 | $Na^+$ | Polystyrene | 400 | 1.72 | 1 | 82 | 23.14% | 7.82 | 85.32 | 73.2 | 2260 |
| Example 19 | $Na^+$ | Polystyrene | 400 | 1.72 | 50 | 82 | 23.14% | 7.82 | 75.87 | 85.12 | 512 |
| Example 20 | $Na^+$ | Polystyrene | 400 | 1.72 | 10 | 82 | 22.58% | 5.5 | 79.84 | 80.14 | 1276 |
| Example 21 | $Na^+$ | Polystyrene | 400 | 1.72 | 10 | 82 | 24.58% | 5.2 | 78.34 | 81.21 | 1107 |
| Example 22 | $Na^+$ | Polystyrene | 400 | 1.72 | 10 | 82 | 32.19% | 8.52 | 88.71 | 82.31 | 1172 |
| Example 23 | $Na^+$ | Polystyrene | 400 | 1.72 | 10 | 82 | 13.79% | 6.18 | 82.76 | 83.82 | 1021 |

(continued)

| | Functional polymer | | | Functional resin layer | | Electrolyte | | | Secondary battery | | |
|---|---|---|---|---|---|---|---|---|---|---|---|
| | Cation | Main chain | $D_v$ (nm) | Y1 (mg/g) | H (μm) | Y3 (ppm) | Y2 (%) | Conductivity (mS/cm) | P1000 (%) | P180 (%) | Deposition amount of Co (ppm) |
| Example 24 | $Na^+$ | Polystyrene | 400 | 1.72 | 10 | 82 | 9.25% | 5.33 | 80.99 | 83.24 | 966 |
| Example 25 | $Na^+$ | Polystyrene | 400 | 1.72 | 10 | 82 | 45.75% | 8.17 | 85.14 | 81.98 | 1224 |
| Example 26 | $Na^+$ | Polystyrene | 400 | 1.72 | 10 | 82 | 23.14% | 7.82 | 87.27 | 79.92 | 1327 |
| Comparative Example 1 | \ | \ | \ | \ | \ | 82 | 23.14% | 7.82 | 85.43 | 54.21 | 2880 |
| Comparative Example 2 | $Na^+$ | Polystyrene | 400 | 1.72 | 10 | 82 | 54.79% | 7.25 | 72.47 | 76.24 | 2049 |

Note: In Table 1, "/" represents that the substance or parameter does not exist.

Analysis of Table 1 data: Comparing the test results of Example 1 and Comparative Examples 1 to 2, it can be learned that by using the technical solution of the present application, a high ion transport rate is ensured while achieving directional capture of transition metal ions, thereby effectively improving the cycling performance and storage stability of the secondary battery.

Technical features in the foregoing embodiments may be combined in any way. For brevity of description, not all possible combinations of the technical features in the foregoing embodiments are described. However, as long as there is no contradiction among combinations of these technical features, all the combinations should be considered within a range recorded in this specification.

The foregoing embodiments show merely several implementations of the present application, and descriptions thereof are specific and detailed, but should not be construed as any limitation on the patent scope of the present application. It should be noted that those of ordinary skill in the art can further make several modifications and improvements without departing from the concept of the present application, and these modifications and improvements also fall within the protection scope of the present application. Therefore, the protection scope of the present patent invention should be subject to the appended claims, and the description and drawings may be used to interpret the content of the claims.

**Claims**

1. A secondary battery, wherein the secondary battery comprises a composite separator and an electrolyte;

   the composite separator comprises a base film and a functional resin layer provided on a surface of the base film, the functional resin layer comprises a functional polymer, the functional polymer contains an iminodiacetate group, and cations of the iminodiacetate group comprise at least one of $Li^+$, $Na^+$, and $K^+$; and
   at 25°C, a conductivity of the electrolyte is greater than or equal to 5 mS/cm.

2. The secondary battery according to claim 1, wherein the iminodiacetate group is represented by formula (1):

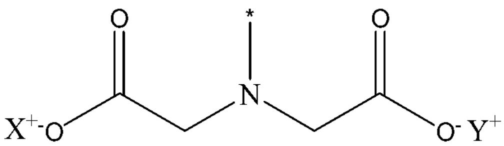

(1) ,

   wherein $X^+$ and $Y^+$ are each independently selected from any one of $H^+$, $Li^+$, $Na^+$, and $K^+$, and $X^+$ and $Y^+$ are not both $H^+$; and
   * represents an attachment site.

3. The secondary battery according to any one of claims 1 and 2, wherein the functional polymer has the iminodiacetate group grafted onto its side chains.

4. The secondary battery according to any one of claims 1 to 3, wherein a volume-based particle size $D_v50$ of the functional polymer is 100 nm to 1200 nm;

   optionally, the volume-based particle size $D_v50$ of the functional polymer is 100 nm to 1000 nm; and
   further optionally, the volume-based particle size $D_v50$ of the functional polymer is 200 nm to 600 nm.

5. The secondary battery according to any one of claims 1 to 4, wherein the functional polymer satisfies at least one of the following conditions (1) to (3):

   (1) a preparation raw material of a main chain of the functional polymer comprises at least one of an acrylic monomer and styrene;
   (2) the functional polymer is a crosslinking polymer; and
   (3) in the functional resin layer, a mass percentage of the functional polymer is 80% to 95%.

6. The secondary battery according to any one of claims 1 to 5, wherein a mass content of hydrogen fluoride in the

electrolyte is less than or equal to 300 ppm.

7. The secondary battery according to any one of claims 1 to 6, wherein components of the electrolyte comprise an electrolytic salt and a solvent, the solvent comprises a cyclic carbonate, and a mass percentage of the cyclic carbonate in the solvent is less than 50%;

   optionally, the mass percentage of the cyclic carbonate in the solvent is 5% to 46%; and
   further optionally, the cyclic carbonate comprises at least one of ethylene carbonate, vinylene carbonate, propylene carbonate, butylene carbonate, and fluoroethylene carbonate.

8. The secondary battery according to claim 7, wherein the electrolyte satisfies at least one of the following conditions (1) and (2):

   (1) the solvent further comprises a chain ester solvent, wherein
   optionally, the chain ester solvent comprises at least one of dimethyl carbonate, methyl ethyl carbonate, diethyl carbonate, methyl acetate, ethyl acetate, propyl acetate, ethyl propionate, and propyl propionate; and
   (2) a concentration of the electrolytic salt is 0.5 mol/L to 2 mol/L.

9. The secondary battery according to any one of claims 1 to 8, wherein components of the electrolyte further comprise a functional additive; and
   optionally, a mass of the functional additive accounts for 2% to 15% of a total mass of the electrolyte.

10. The secondary battery according to claim 9, wherein the functional additive comprises at least one of a film-forming additive and a complexing additive; optionally, the film-forming additive comprises at least one of a sulfate-based film-forming additive, a sulfite-based film-forming additive, a sultone-based film-forming additive, a disulfonate-based film-forming additive, an aromatic film-forming additive, an isocyanate-based film-forming additive, a phosphite-based film-forming additive, a phosphate-based film-forming additive, and a borate-based film-forming additive; and optionally, the complexing additive comprises at least one of a nitrile-based complexing additive, a crown ether-based complexing additive, and an oxime salt-based complexing additive.

11. The secondary battery according to any one of claims 1 to 10, wherein the functional resin layer satisfies at least one of the following conditions (1) and (2):

   (1) 1 g of the functional resin layer contains 0.2 mg to 5 mg of the cations; and
   (2) a thickness of the functional resin layer is 1 μm to 50 μm; optionally, the thickness of the functional resin layer is 2 μm to 30 μm; and further optionally, the thickness of the functional resin layer is 5 μm to 20 μm.

12. The secondary battery according to any one of claims 1 to 5 and 8 to 11, wherein the secondary battery further comprises a positive electrode sheet and a negative electrode sheet, the composite separator is disposed between the positive electrode sheet and the negative electrode sheet, and in the composite separator, the functional resin layer is provided on at least one side surface of the base film that is closer to the positive electrode sheet.

13. An electric apparatus, wherein the electric apparatus comprises the secondary battery according to any one of claims 1 to 12.

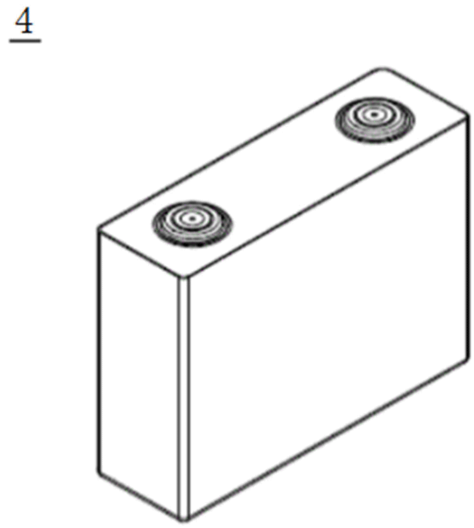


FIG. 1

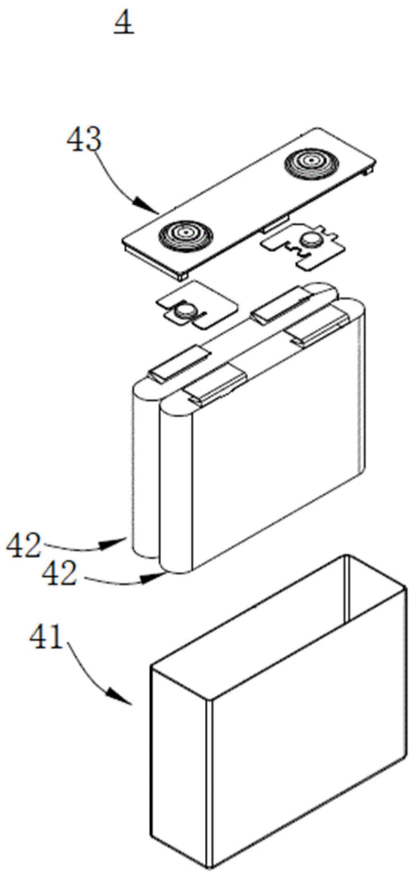


FIG. 2

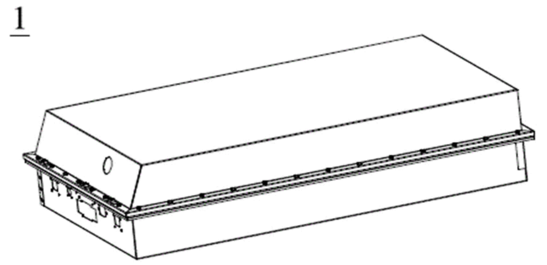


FIG. 3

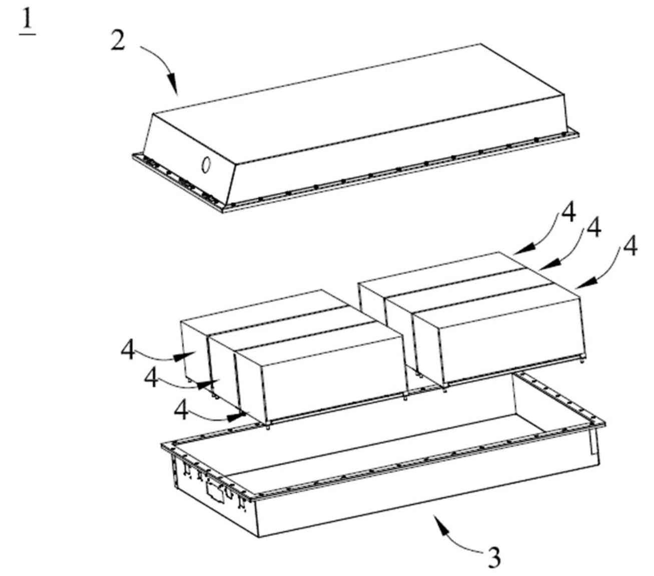


FIG. 4

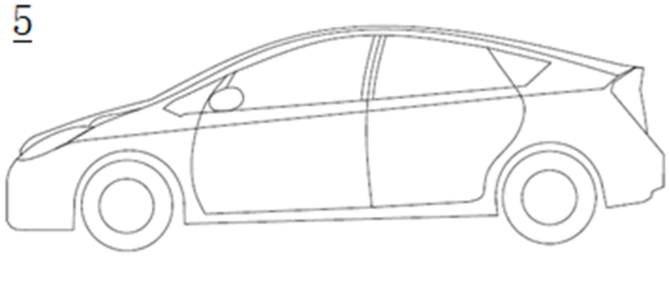


FIG. 5

## INTERNATIONAL SEARCH REPORT

International application No.
**PCT/CN2024/093420**

**A. CLASSIFICATION OF SUBJECT MATTER**

H01M10/0567(2010.01)i

According to International Patent Classification (IPC) or to both national classification and IPC

**B. FIELDS SEARCHED**

Minimum documentation searched (classification system followed by classification symbols)

IPC: H01M10

Documentation searched other than minimum documentation to the extent that such documents are included in the fields searched

Electronic data base consulted during the international search (name of data base and, where practicable, search terms used)

CNTXT, ENTXTC, DWPI, CNKI, ISI_Web of Science, CAPLUS(STN): 复合隔离膜, 隔 w膜, 隔?膜, 隔板, 基板, 基膜, 膜, 亚氨基, 亚胺基, 亚氨基二乙酸+, 亚氨基二乙酸钾, 亚氨基二乙酸钠, 亚氨基二乙酸盐, 亚氨基二乙酸锂, 螯合, 交联, IDA +, CH-90, 电池, battery cell, membrane, film, separator, pore porous polyolefin resin polymer oxetanyl epoxy base, cross link +, iminodiacetic acid, lithium, potassium, sodium

**C. DOCUMENTS CONSIDERED TO BE RELEVANT**

| Category* | Citation of document, with indication, where appropriate, of the relevant passages | Relevant to claim No. |
|---|---|---|
| Y | CN 101803066 A (NITTO DENKO CORP.) 11 August 2010 (2010-08-11)<br>description, paragraphs 35-56, 99-101 and 114-115, manufacturing example 11, and embodiment 3 | 1-13 |
| Y | CN 113206299 A (ANHUI UNIVERSITY OF SCIENCE & TECHNOLOGY) 03 August 2021 (2021-08-03)<br>description, paragraphs 5 and 24-27, and embodiment 1 | 1-13 |
| Y | JP 2009123687 A (NITTO DENKO CORP.) 04 June 2009 (2009-06-04)<br>description, paragraphs 69-104 | 1-13 |
| A | CN 101032042 A (NITTO DENKO CORP.) 05 September 2007 (2007-09-05)<br>entire document | 1-13 |
| A | CN 105789538 A (CONTEMPORARY AMPEREX TECHNOLOGY CO., LTD.) 20 July 2016 (2016-07-20)<br>entire document | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 July 2024** | **11 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2024/093420**

| C. DOCUMENTS CONSIDERED TO BE RELEVANT | | |
|---|---|---|
| Category* | Citation of document, with indication, where appropriate, of the relevant passages | Relevant to claim No. |
| A | CN 107528086 A (GM GLOBAL TECHNOLOGY OPERATIONS LLC et al.) 29 December 2017 (2017-12-29)<br>entire document | 1-13 |
| A | CN 107845811 A (CONTEMPORARY AMPEREX TECHNOLOGY CO., LTD.) 27 March 2018 (2018-03-27)<br>description, paragraphs 35-48, embodiments and table 1 | 1-13 |
| A | JP 2007207690 A (ASAHI KASEI CHEMICALS CORP.) 16 August 2007 (2007-08-16)<br>entire document | 1-13 |

Form PCT/ISA/210 (second sheet) (July 2022)

**INTERNATIONAL SEARCH REPORT**
**Information on patent family members**

International application No.
**PCT/CN2024/093420**

| Patent document cited in search report | Publication date (day/month/year) | Patent family member(s) | Publication date (day/month/year) |
|---|---|---|---|
| CN 101803066 A | 11 August 2010 | WO 2009035132 A1 | 19 March 2009 |
| | | EP 2214226 A1 | 04 August 2010 |
| | | EP 2214226 A4 | 02 January 2013 |
| | | EP 2214226 B1 | 02 December 2015 |
| | | JP 2009087929 A | 23 April 2009 |
| | | JP 5286001 B2 | 11 September 2013 |
| | | US 2010239900 A1 | 23 September 2010 |
| | | US 8349031 B2 | 08 January 2013 |
| CN 113206299 A | 03 August 2021 | None | |
| JP 2009123687 A | 04 June 2009 | JP 5373349 B2 | 18 December 2013 |
| CN 101032042 A | 05 September 2007 | None | |
| CN 105789538 A | 20 July 2016 | None | |
| CN 107528086 A | 29 December 2017 | US 2017365882 A1 | 21 December 2017 |
| | | US 10008749 B2 | 26 June 2018 |
| | | DE 102017113276 A1 | 21 December 2017 |
| | | DE 102017113276 B4 | 21 April 2022 |
| CN 107845811 A | 27 March 2018 | US 2019296356 A1 | 26 September 2019 |
| | | US 11069892 B2 | 20 July 2021 |
| | | EP 3503272 A1 | 26 June 2019 |
| | | EP 3503272 A4 | 24 June 2020 |
| | | EP 3503272 B1 | 04 October 2023 |
| | | WO 2018049914 A1 | 22 March 2018 |
| JP 2007207690 A | 16 August 2007 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311493719


### Non-patent literature cited in the description


- *GB/T19077-2016/ISO 13320:2009*
- *GB/T19077-2016/ISO13320:2009*
- Analysis Method for Lithium Hexafluorophosphate Products. *GB/T19282-2014*
- Electrolyte for Lithium Ion Batteries. *the industry standard SJT 11723-2018*, 3-5